# EUROPEAN PATENT SPECIFICATION

(11) **EP 2 977 169 B1**
(45) Date of publication and mention of the grant of the patent: **16.01.2019**
(21) Application number: 13878759.3
(22) Date of filing: 29.04.2013
(51) Int. Cl.: B29C 45/64, B29C 49/56, B29C 49/36, B29L 22/00

(54) **BLOW MOULD WITH LINKAGE MECHANISM BETWEEN SINGLE SHAFT DIE OPENING AND CLOSING AND BOTTOM DIE CLAMPING**
BLASFORM MIT GESTÄNGEMECHANISMUS ZWISCHEN EINWELLEN-GESENKÖFFNUNG UND -SCHLIESSUNG UND UNTERGESENKAUFSPANNUNG
MOULE POUR MOULAGE PAR SOUFFLAGE AVEC MÉCANISME DE LIAISON ENTRE OUVERTURE ET FERMETURE DE MATRICE À ARBRE UNIQUE ET SERRAGE DE MATRICE INFÉRIEURE

(30) Priority: 19.03.2013 CN 201310089026
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Zhangjiagang Jiangsu 215624 (CN); CAI, Zhiyi, Zhangjiagang Jiangsu 215624 (CN); YANG, Xiaying, Zhangjiagang Jiangsu 215624 (CN); HE, Deping, Zhangjiagang Jiangsu 215624 (CN)
(74) Representative: De Vries & Metman
(86) International application number: PCT/CN2013/075023
(87) International publication number: WO 2014/146332

(56) References cited:
- CN-A- 102 765 186
- CN-A- 102 922 731
- CN-U- 202 293 307
- CN-U- 203 185 634
- US-A1- 2010 203 185
- US-A1- 2012 177 771
- US-B2- 7 037 099

## Description

### Field of the Invention

The present invention relates to the field of processing equipment for a beverage bottle, and more particularly to a linkage of mould opening and closing mechanism and a bottom mould locking.

### Description of the Related Art

Generally a bottle blowing machine comprises a mould opening and closing mechanism and a bottom mould positioning mechanism. A conventional mould opening and closing mechanism comprises a machine frame, a fixed mould plate and a moving mould plate which are mounted on the machine frame. A mould locking mechanism is provided at the joint of the fixed mould plate and the moving mould plate. The moving mould plate is L-shaped and driven by a mould opening and closing air cylinder. The mould opening and closing air cylinder drives a spline, and the spline drives a moving mould plate gear mounted on a gear shaft, and the gear shaft is connected with the moving mould plate and mounted on a support frame. A conventional bottom mould locking mechanism comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame.

A bottom mould locking mechanism with double shafts is disclosed in patent publication No. US 2010203185A1. A blow mold comprises mold halves and a base part, which can be positioned by a lifting device. There are two shafts, one extends in the longitudinal direction of the blowing station and another drive shaft. To predetermine positioning motions, the base part is connected by a connecting rod with a positioning lever, which is connected with the drive shaft. The base part is guided by a cam follower in a cam track, which extends within a cam support connecting with th e support structure rigidly. To predetermine positioning motions, the base part is connected by a connecting rod with a positioning lever, which is connected with the drive shaft. Besides the engagement of the cam follower in the cam track, the base part is guided along another support track. To provide a positive-locking connection between the base part and the mold support, the base part has to carry out a movement transverse to the horizontal direction at the end of the movement to the longitudinal direction.

Further devices are known from No. US 2012177771.

Thus, in the prior art, the mould opening and closing mechanism and the bottom mould positioning mechanism are complicated in configuration and bulky, and each mechanism is self-driven, thereby leading to the inconvenience in operation and high cost.

### Summary of the Invention

An object of the invention is to provide an improved linkage of mould opening and closing and bottom mould locking.

For the foregoing purpose, the following technical solution is utilized in the invention. A system comprises a bottle blow moulding machine having a machine frame, a linkage of mould opening and closing and bottom mould locking, mounted on the bottle blowing machine, the linkage comprises a mould opening and closing assembly having a mould opening state and a mould closing state, the mould opening and closing assembly comprises a bottom mould movable relative to a machine frame in up-down direction, a fixed mould plate fixedly disposed on the machine frame and a moving mould plate rotatable relative to the machine frame, whereby when the mould opening and closing assembly is in the mould closing state, the moving mould plate is engaged with the fixed mould plate, such that the moving mould plate, the fixed mould plate and the bottom mould together enclose to provide a cavity, the linkage also comprises a bottom mould locking assembly for locking the bottom mould with the machine frame of the bottle blowing machine.

The bottom mould locking assembly comprises:
a sliding block slidable relative to the machine frame;
a swing member swingably connected on the machine frame around a first axis for driving the sliding of the sliding block; and
a rotation member rotatable relative to the machine frame for driving the swinging of the swing member relative to the machine frame during its' rotation, the rotation member and the moving mould plate is fixedly connected on a rotation shaft which is driven by a power source to rotate around a second axis;
whereby when the mould opening and closing assembly is in the mould closing state, the moving mould plate is engaged with the fixed mould plate, and the moving mould plate, the fixed mould plate and the bottom mould together enclose to provide a cavity, the sliding block is inserted between the bottom mould and the machine frame and contacts against the bottom mould, and when the mould opening and closing assembly is in the mould opening state, the moving mould plate is opened relative to the fixed mould plate, such that the sliding block is detached from the bottom mould. The sliding block is slidably disposed on a guide rail on the machine frame which extends towards a lower portion of the bottom mould. The rotation of the rotation member and the moving mould plate is driven by the rotation of the rotation shaft, and the rotation of the rotation member drives the swinging of the swing member and the corresponding sliding of the sliding block, thus, the rotation of the moving mould plate can achieve the mould closing of the mould opening and closing assembly, such that the sliding block restricts the bottom mould in the mould closing state, and release the bottom mould in the mould opening state.

Preferably, the rotation shaft extends through the moving mould plate and drives it to rotate.

Preferably, the rotation shaft extends through the rotation member and drives it to rotate.

Preferably, the mould opening and closing assembly also comprises a mould locking mechanism for locking the fixed mould plate with the moving mould plate in the mould closing state. At least one first connecting convex platform is provided on the moving mould plate, a pin hole is opened on the first connecting convex platform, a second connecting convex platform is provided on the fixed mould plate for cooperating with the first connecting convex platform. The mould locking mechanism comprises a connecting shaft extending through the fixed mould plate, and a locking pin connected with the connecting shaft in a transmission way, the locking pin is moveably provided in the second connecting convex platform, when in the mould closing state, the locking pin extends through the second connecting convex platform and enter into the pin hole, such that the moving mould plate and the fixed mould plate are locked.

A projection is provided at one side of the swing member, the rotation member has a guiding surface thereon. The projection can slide on the guiding surface. A transmission fork part is provided at the other side of the swing member. A convex column is formed on the sliding block, the convex column is slidably provided in the transmission fork portion. The swing member is rotatably disposed on the machine frame.

The bottom mould locking assembly also comprises a guide rail which is disposed on the machine frame and extends towards to the lower portion of the bottom mould. The sliding block is slidably disposed on the guide rail.

Preferably, a swing arm is connected on a lower end of the rotation shaft, and the power source drives the rotation of the rotation shaft 12 by the swing arm.

More preferably, the machine frame comprises a support frame, an upper frame located above the support frame and an upright frame fixedly connected between the support frame and the upper frame, the mould opening and closing assembly and the bottom mould locking assembly are located above the support frame.

Still more preferably, an upper end of the rotation shaft is rotatably connected with the upper frame.

Preferably, an elastic member is arranged between the swing member and the machine frame for providing a restoring force for the swing member.

Due to the above technical solution, the present invention has the following advantages as compared with the prior art: the linkage of the mould opening and closing assembly and the bottom mould locking assembly are driven by one rotation shaft. Thus, the driving is achieved by a simple configuration, and the whole device of the invention is simple in structure and convenient in operation.

### Brief Description of the Drawings

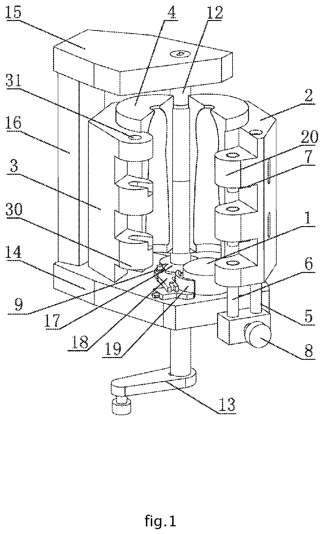

Fig.1 is a schematic drawing of a linkage of the invention in mould opening state according to the invention;

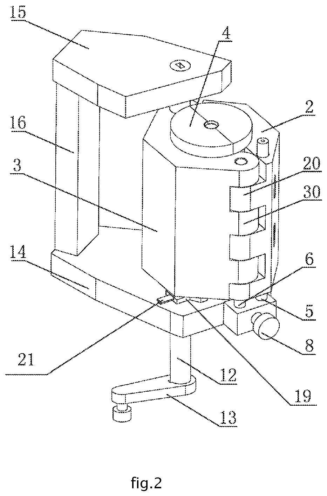

Fig.2 is a schematic drawing of a linkage of the invention in mould closing state according to the invention;

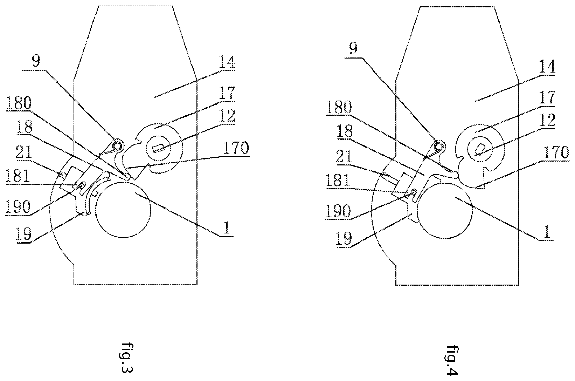

Fig.3 is a schematic drawing of a bottom mould locking assembly in unlocked state according to the invention;
Fig.4 is a schematic drawing of a bottom mould locking assembly in locked state according to the invention;
   wherein: 1. a bottom mould; 2. a fixed mould plate; 20. a second connecting convex platform; 3. a moving mould plate; 30. a first connecting convex platform; 31. a pin hole; 4. a mould; 5. a connecting shaft; 6. a locking pin; 7. a connecting rod; 8. a driving block; 9. a torsional spring ;12. a rotation shaft; 13. a swing arm; 14. a support frame; 15. an upper frame; 16. an electing frame; 17. a rotation member; 170. a guiding surface; 18. a swing member; 180. a projection; 181. a transmission fork; 19. a sliding block; 190. a convex column; 21 a guide rail.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

Fig.s 1-2 fully show a linkage of mould opening and closing and bottom mould locking according to the invention, and this linkage is mounted on a bottom blowing machine. The bottom blowing machine is a device well known in the art, thus, only some parts involved by the invention are illustrated in drawings, instead of the whole bottom blowing machine.

The linkage shown in fig.s 1-2 comprises a mould opening and closing assembly and a driving assembly, and the assemblies will be described in more detail hereinafter.

The mould opening and closing assembly comprises a bottom mould 1, a fixed mould plate 2 fixedly disposed on the machine frame of the bottle blowing machine and a moving mould plate 3 for cooperating with the fixed mould plate 2. The mould opening and closing assembly has a mould opening state and a mould closing state, when in the mould closing state, the fixed mould plate 2 cooperates with the moving mould plate 3, and the bottom mould 1 rises such that they enclose to provide a cavity. The fixed mould plate 2 and the moving mould plate 3 respectively are provided with a mould.

The mould opening and closing assembly also comprises a mould locking mechanism for locking the fixed mould plate 2 with the moving mould plate 3 in the mould closing state. Specifically, a plurality of first connecting convex platforms 30 are provided on the moving mould plate 3, a notch is formed between two adjacent first connecting convex platforms 30, a pin hole 31 is opened on each first connecting convex platforms 30, and the pin hole 31 runs through the first connecting convex platform 30 in up-down direction. Multiple second connecting convex platforms 20 are provided on the fixed mould plate 2 for cooperating with the first connecting convex platforms 30. The mould locking mechanism comprises a connecting shaft 5 extending through the fixed mould plate 2 and locking pins 6 connected with the connecting shaft 5 in transmission way. The quantity of the locking pins 6 is the same as that of the second connecting convex platforms 20, and the locking pins 6 are movably or extendably provided in the second connecting convex platforms 20. The connecting shaft 5 is parallel to the locking pins 6, the connecting shaft 5 is connected with the locking pins 6 by the connecting rod 7 in transmission way, and the lowest locking pin 6 is directly connected with the driving block 8.

When in the mould closing state, the first connecting convex platforms 30 of the moving mould plate 3 stretch into the notches of the second connecting convex platforms 20 of the fixed mould plate 2 to pull the driving block 8 upwards, such that the driving block 8 drives the connecting shaft 5 to drive the locking pin 6 to extend through the second connecting convex platforms 20 and enter into the pin holes 31 of the first connecting convex platforms 30, and the fixed mould plate 2 and the moving mould plate 3 are locked.

The linkage also comprises a bottom mould locking mechanism for locking the bottom mould 1 when the bottom mould 1 rises. As shown in fig.s 3-4, the bottom locking assembly comprises a rotation member 17, a swing member 18 connected with the rotation member 17 in transmission way, and a sliding block 19 connected with the swing member 18 in transmission way. The specific connection relation of the rotation member 17, the swing member 18 and the sliding block 19 is as follows: A projection 180 is provided at one side of the swing member 18, the rotation member 17 has a guiding surface thereon, and the projection 180 can slide on the guiding surface 170. A notch is opened at the other side of the swing member 18, and the portion of the swing member 18 where the notch is forms a transmission fork part 181. A convex column 190 is formed on the sliding block 19, the convex column 190 is slidably provided in the transmission fork part 181. The swing member 18 is rotatably disposed on the machine frame.

A torsional spring 9 is arranged between the rotation member 18 and the machine frame for provide a restoring force for the swing member 18, as shown in fig.s 1 and 4-5. In the course of rotation of the rotating member 17, when the contact position of the projection 180 with the guiding surface 170 gets farther and farther away from the second axis, the swing member 18 is pushed by the rotating member 17 to swing. Otherwise, in the course of rotation of the rotating member 17, when the contact position of the projection 180 with the guiding surface 170 gets nearer to nearer to the second axis, an external force is required to drive the swing member 18 to swing, and the torsional spring 9 is used for providing such an external force. Certainly, the external force can be provided in other way, for example, the swing member 18 is driven by the rotating member 17.

Furthermore, a guide rail 21 extending towards the lower portion of the bottom mould 1 is provided on the machine frame, the sliding block 19 is slidably disposed on the guide rail 21.

In this embodiment, the driving assembly comprises a rotation shaft 12 rotatable around its' shaft axis, and a power source for driving the rotation of the rotation shaft. A swing arm 13 is connected on the lower end of the rotation shaft 12, and the power source drives the rotation of the rotation shaft 12 by the swing arm 13. The moving mould plate 3 and the rotation member 17 are fixedly connected with the rotation shaft 12, and the rotation shaft 12 extends through the moving mould plate 13 to drive it to rotate. As shown in fig.s 2 and 4, when mould closing is desired, the power source drives the swing arm 13 to drive the rotation of the rotation shaft 12, the moving mould plate 3 rotates with the rotation of the rotation shaft 12 and draw close to the fixed mould plate 2 to together enclose to provide a cavity. The bottom mould 1 rises such that a gap is formed between the bottom mould 1 and the bracket 14. The rotation member 17 also rotates with the rotation shaft 12, the projection 180 slides along the guiding surface 170, the swing member 18 rotates to drive the convex column 190 on the sliding block 19 to slide in the transmission fork part 181, the sliding block 19 slides along the guide rail 21 into the gap between the bottom mould 1 and the support frame 14, thereby achieving the locking of the bottom mould 1. Vice versa, the course of mould opening will not be described in more detail. From this, the linkage of the mould opening and closing and the bottom mould locking is achieved.

The machine frame comprises a support frame 14, an upper frame 15 located above the support frame 14 and an upright frame 16 fixedly connected between the support frame 14 and the upper frame 15, the mould opening and closing assembly and the bottom mould locking assembly are located above the support frame 14. The upper end of the rotation shaft 12 is rotatably connected with the upper frame 15.

The above embodiment is described for illustrating the technical concept and features of the invention, the aim is intended to enable a person skilled in the art to appreciate the content of the invention and further implement it, and the protecting scope of the invention can not be limited hereby.

## Claims

1. A system comprising:
a bottle blow moulding machine having a machine frame,
a linkage for mould opening and closing and bottom mould locking, mounted on the bottle blowing machine,
the linkage comprising:
a mould opening and closing assembly having a mould opening state and a mould closing state,
the mould opening and closing assembly comprising:
a bottom mould (1) movable relative to a machine frame in up-down direction,
a fixed mould plate (2) fixedly disposed on the machine frame, and
a moving mould plate (3) rotatable relative to the machine frame,
whereby when the mould opening and closing assembly is in the mould closing state, the moving mould plate (3) is engaged with the fixed mould plate(2), such that the moving mould plate (3), the fixed mould plate (2) and the bottom mould (1) together enclose to provide a cavity,
the linkage also comprising:
a bottom mould locking assembly for locking the bottom mould (1) with the machine frame of the bottle blowing machine,
wherein the bottom mould locking assembly comprises:
a sliding block (19) slidable relative to the machine frame;
a swing member (18) swingably connected on the machine frame around a first axis for driving the sliding of the sliding block (19); and
a rotation member (17) rotatable relative to the machine frame for driving the swinging of the swing member (18) relative to the machine frame during it's rotation, the rotation member (17) and the moving mould plate (3) being fixedly connected on a rotation shaft (12) which is driven by a power source to rotate around a second axis;
whereby when the mould opening and closing assembly is in the mould closing state, the sliding block (19) is inserted between the bottom mould (1) and the machine frame and contacts against the bottom mould (1), and when the mould opening and closing assembly is in the mould opening state, the moving mould plate is opened relative to the fixed mould plate (2), such that the sliding block (19) is detached from the bottom mould (1),
**characterized in that** the sliding block is slidably disposed on a guide rail on the machine frame which extends towards a lower portion of the bottom mould.

2. The system as claimed in claim 1, wherein a through-hole is opened on each of the rotation member (17) and the moving mould plate (3), the rotation shaft (12) sequentially extending through the rotation member (17) and the moving mould plate (3) and being connected with them.

3. The system as claimed in claim 1, wherein the mould opening and closing assembly also comprises a mould locking mechanism for locking the fixed mould plate (2) with the moving mould plate (3) in the mould closing state, the mould locking mechanism comprising:
at least one first connecting convex platform (30) formed on the moving mould plate (3), a pin hole (31) being opened on the first connecting convex platform (30);
a second connecting convex platform (20) formed on the fixed mould plate (2) for cooperating with the first connecting convex platform (30), a mounting hole being opened on the second connecting convex platform (20);
a locking pin (6) movably or extendably inserted the mounting hole of the second connecting convex platform (20), a connecting shaft (5) extending through the fixed mould plate (2), and the connecting shaft (5) being connected with the locking pin (6) in a transmission way;
when the mould opening and closing assembly is in the mould closing state, the locking pin (6) extends through the second connecting convex platform (20) and into the pin hole (31) to lock the moving mould plate (3) with the fixed mould plate (2), in such a way that locking pin (6) is admitted to enter into the mounting hole of the second connecting convex platform (20) and is detached from the pin hole (31).

4. The system as claimed in claim 1, wherein a linear guide rail (21) is fixedly disposed on the machine frame, the sliding block (19) being slidably disposed on the guide rail (21) along the guide rail (21).

5. The system as claimed in claim 1, wherein a projection (180) is provided on the swing member (18), the rotation member (17) has a guiding surface (170) thereon, the projection (180) slidably contacting with the guiding surface (170), and the distance between the contact position of the projection (180) with the guiding surface (170) and the second axis changing with the rotation of the rotation member (17).

6. The system as claimed in claim 1, wherein a notch is opened on the swing member (18) at a distance from the first axis, and the portion of the swing member where the notch is opened forming a transmission fork part (181), a convex column (190) being provided on the sliding block (19), and the convex column (190) being slidably provided in the transmission fork part (181).

7. The system as claimed in claim 1, wherein a swing arm (13) is connected on a lower end of the rotation shaft (12), and the power source driving the rotation of the rotation shaft (12) by the swing arm (13).

8. The system as claimed in any of claims 1-7, wherein the machine frame comprises a support frame (14), an upper frame (15) located above the support frame (14) and an upright frame (16) fixedly connected between the support frame (14) and the upper frame (15), the mould opening and closing assembly and the bottom mould locking assembly being located above the support frame (14).

9. The system as claimed in claim 8, wherein an upper end of the rotation shaft (12) is rotatably connected with the upper frame (15).

10. The system as claimed in any of claims 1-7, wherein an elastic member is arranged between the swing member (18) and the machine frame for providing a restoring force for the swing member (18).

## Patentansprüche

1. System mit:
einer Flaschenblasformmaschine mit einem Maschinenrahmen;
einer auf der Flaschenblasformmaschine montierten gekoppelten Struktur zum Öffnen und Schließen einer Form und zum Verriegeln einer unteren Form, wobei die gekoppelte Struktur aufweist:
eine Formöffnungs- und -schließanordnung mit einem Formöffnungszustand und einem Formschließzustand,
wobei die Formöffnungs- und -schließanordnung aufweist:
eine untere Form (1), die relativ zu einem Maschinenrahmen in einer Aufwärts-Abwärtsrichtung bewegbar ist,
eine feststehende Formplatte (2), die auf dem Maschinenrahmen fest angeordnet ist, und
eine bewegbare Formplatte (3), die relativ zum Maschinenrahmen drehbar ist,
wobei, wenn die Formöffnungs- und -schließanordnung sich im Formschließzustand befindet, die bewegbare Formplatte (3) mit der feststehenden Formplatte (2) in Eingriff steht, so dass die bewegbare Formplatte (3), die feststehende Formplatte (2) und die untere Form (1) gemeinsam einen Hohlraum umschließen,
wobei die gekoppelte Struktur ferner aufweist:
eine Verriegelanordnung zum Verriegeln der unteren Form (1) mit dem Maschinenrahmen der Flaschenblasformmaschine,
wobei die Anordnung zum Verriegeln der unteren Form aufweist:
einen Gleitblock (19), der relativ zum Maschinenrahmen gleitend angeordnet ist;
ein Schwenkelement (18), das mit dem Maschinenrahmen um eine erste Achse schwenkbar verbunden ist, zum Antreiben der Gleitbewegung des Gleitblocks (19); und
ein Drehelement (17), das relativ zum Maschinenrahmen drehbar ist, zum Antreiben der Schwenkbewegung des Schwenkelements (18) relativ zum Maschinenrahmen während seiner Drehbewegung, wobei das Drehelement (17) und die bewegbare Formplatte (3) auf einer Drehwelle (12) fest verbunden sind, die durch eine Antriebsquelle angetrieben wird, so dass sie sich um eine zweite Achse dreht,
wobei, wenn sich die Formöffnungs- und - schließanordnung im Formschließzustand befindet, der Gleitblock (19) zwischen der unteren Form (1) und dem Maschinenrahmen eingesetzt ist und an der unteren Form (1) anliegt, und wenn die Formöffnung- und -schließanordnung sich im Formöffnungszustand befindet, die bewegbare Formplatte relativ zur feststehenden Formplatte (2) geöffnet ist, so dass der Gleitblock (19) von der unteren Form (1) gelöst ist;
**dadurch gekennzeichnet, dass**
der Gleitblock auf einer Führungsschiene auf dem Maschinenrahmen gleitend angeordnet ist, die sich in Richtung zu einem unteren Abschnitt der unteren Form erstreckt.

2. System nach Anspruch 1, wobei ein Durchgangsloch sowohl in dem Drehelement (17) als auch in der sich bewegenden Formplatte (3) ausgebildet ist, wobei sich die Drehwelle (12) nacheinander durch das Drehelement (17) und die bewegbare Formplatte (3) erstreckt und mit ihnen verbunden ist.

3. System nach Anspruch 1, wobei die Formöffnungs- und Schließanordnung außerdem einen Formverriegelungsmechanismus zum Verriegeln der feststehenden Formplatte (2) mit der bewegbaren Formplatte (3) im Formschließzustand aufweist, wobei der Formverriegelungsmechanismus aufweist:
mindestens eine erste konvexe Verbindungsplattform (30), die auf der bewegbaren Formplatte (3) ausgebildet ist, wobei ein Stiftloch (31) in der ersten konvexen Verbindungsplattform (30) ausgebildet ist;
eine zweite konvexe Verbindungsplattform (20), die auf der feststehenden Formplatte (2) ausgebildet und dafür vorgesehen ist, mit der ersten konvexen Verbindungsplattform (30) zusammenzuwirken, wobei ein Montageloch in der zweiten konvexen Verbindungsplattform (20) ausgebildet ist;
einen Verriegelungsstift (6), der in das Montageloch der zweiten konvexen Verbindungsplattform (20) beweglich oder ausfahrbar eingesetzt ist, wobei sich ein Verbindungsschaft (5) durch die feststehende Formplatte (2) erstreckt, und wobei der Verbindungsschaft (5) mit dem Verriegelungsstift (6) auf eine kraftübertragende Weise verbunden ist, wobei,
wenn sich die Formöffnungs- und Schließanordnung im Formschließzustand befindet, der Verriegelungsstift (6) sich durch die zweite konvexe Verbindungsplattform (20) und in das Stiftloch (31) erstreckt, um die bewegbare Formplatte (3) mit der feststehenden Formplatte (2) zu verriegeln, derart, dass ermöglicht wird, dass der Verriegelungsstift (6) in das Montageloch der zweiten konvexen Verbindungsplattform (20) eingeführt und vom Stiftloch (31) gelöst wird.

4. System nach Anspruch 1, wobei eine Linearführungsschiene (21) fest auf dem Maschinenrahmen angeordnet ist, wobei der Gleitblock (19) auf der Führungsschiene (21) entlang der Führungsschiene (21) gleitend angeordnet ist.

5. System nach Anspruch 1, wobei ein Vorsprung (180) auf dem Schwenkelement (18) bereitgestellt ist, wobei auf dem Drehelement (17) eine Führungsfläche (170) vorhanden ist, wobei der Vorsprung (180) mit der Führungsfläche (170) in Gleitkontakt steht, und wobei der Abstand zwischen der Kontaktposition des Vorsprungs (180) mit der Führungsfläche (170) und der zweiten Achse sich mit der Drehbewegung des Drehelements (17) ändert.

6. System nach Anspruch 1, wobei eine Nut im Schwenkelement (18) in einem Abstand von der ersten Achse ausgebildet ist, und wobei der Abschnitt des Schwenkelements, wo die Nut ausgebildet ist, einen Kraftübertragungsgabelabschnitt (181) bildet, wobei eine konvexe Säule (190) auf dem Gleitblock (19) bereitgestellt ist, und wobei die konvexe Säule (190) im Kraftübertragungsgabelabschnitt (181) gleitend angeordnet ist.

7. System nach Anspruch 1, wobei ein Schwenkarm (13) mit einem unteren Ende der Drehwelle (12) verbunden ist und die Antriebsquelle die Drehbewegung der Drehwelle (12) durch den Schwenkarm (13) antreibt.

8. System nach einem der Ansprüche 1 bis 7, wobei der Maschinenrahmen einen Stützrahmen (14), einen oberen Rahmen (15), der oberhalb des Stützrahmens (14) angeordnet ist, und einen aufrechten Rahmen (16) aufweist, der zwischen dem Stützrahmen (14) und dem oberen Rahmen (15) fest verbunden ist, wobei die Formöffnungs- und Schließanordnung und die Anordnung zum Verriegeln der unteren Form oberhalb des Stützrahmens (14) angeordnet sind.

9. System nach Anspruch 8, wobei ein oberes Ende der Drehwelle (12) mit dem oberen Rahmen (15) drehbar verbunden ist.

10. System nach einem der Ansprüche 1 bis 7, wobei ein elastisches Element zum Bereitstellen einer Rückstellkraft für das Schwenkelement (18) zwischen dem Schwenkelement (18) und dem Maschinenrahmen angeordnet ist.

## Revendications

1. Système comprenant :
une machine de moulage par soufflage de bouteille ayant un bâti de machine,
une tringlerie pour l'ouverture et la fermeture de moule et le blocage de fond de moule, montée sur la machine de soufflage de bouteille,
la tringlerie comprenant :
un ensemble d'ouverture et de fermeture de moule ayant un état d'ouverture de moule et un état de fermeture de moule,
l'ensemble d'ouverture et de fermeture de moule comprenant :
un fond de moule (1) mobile par rapport à un bâti de machine dans une direction de haut en bas,
une plaque de moule fixe (2) disposée à demeure sur le bâti de machine, et
une plaque de moule mobile (3) pouvant tourner par rapport au bâti de machine,
moyennant quoi lorsque l'ensemble d'ouverture et de fermeture de moule est dans l'état de fermeture de moule, la plaque de moule mobile (3) est engagée avec la plaque de moule fixe (2), de sorte que la plaque de moule mobile (3), la plaque de moule fixe (2) et le fond de moule (1) se renferment conjointement pour fournir une cavité,
la tringlerie comprenant également :
un ensemble de blocage de fond de moule pour bloquer le fond de moule (1) avec le bâti de machine de la machine de soufflage de bouteille,
dans lequel l'ensemble de blocage de fond de moule comprend :
un bloc de coulissement (19) pouvant coulisser par rapport au bâti de machine ;
un organe d'oscillation (18) raccordé oscillant sur le bâti de machine autour d'un premier axe pour entraîner le coulissement du bloc de coulissement (19) ; et
un organe de rotation (17) pouvant tourner par rapport au bâti de machine pour entraîner l'oscillation de l'organe d'oscillation (18) par rapport au bâti de machine pendant sa rotation, l'organe de rotation (17) et la plaque de moule mobile (3) étant raccordés à demeure sur un arbre de rotation (12) qui est entraîné par une source de puissance pour tourner autour d'un second axe ;
moyennant quoi lorsque l'ensemble d'ouverture et de fermeture de moule est dans l'état de fermeture de moule, le bloc de coulissement (19) est inséré entre le fond de moule (1) et le bâti de machine et vient en contact contre le fond de moule (1), et lorsque l'ensemble d'ouverture et de fermeture de moule est dans l'état d'ouverture de moule, la plaque de moule mobile est ouverte par rapport à la plaque de moule fixe (2), de sorte que le bloc de coulissement (19) soit détaché du fond de moule (1),
**caractérisé en ce que** le bloc de coulissement est disposé coulissant sur un rail de guidage sur le bâti de machine qui s'étend vers une portion inférieure du fond de moule.

2. Système selon la revendication 1, dans lequel un trou traversant est ouvert sur chacun de l'organe de rotation (17) et de la plaque de moule mobile (3), l'arbre de rotation (12) s'étendant séquentiellement à travers l'organe de rotation (17) et la plaque de moule mobile (3) et étant raccordé à ceux-ci.

3. Système selon la revendication 1, dans lequel l'ensemble d'ouverture et de fermeture de moule comprend également un mécanisme de blocage de moule pour bloquer la plaque de moule fixe (2) avec la plaque de moule mobile (3) dans l'état de fermeture de moule, le mécanisme de blocage de moule comprenant :
au moins une première plateforme convexe de raccordement (30) formée sur la plaque de moule mobile (3), un trou de goupille (31) étant ouvert sur la première plateforme convexe de raccordement (30) ;
une seconde plateforme convexe de raccordement (20) formée sur la plaque de moule fixe (2) pour coopérer avec la première plateforme convexe de raccordement (30), un trou de montage étant ouvert sur la seconde plateforme convexe de raccordement (20) ;
une goupille de blocage (6) insérée mobile ou extensible dans le trou de montage de la seconde plateforme convexe de raccordement (20), un arbre de raccordement (5) s'étendant à travers la plaque de moule fixe (2), et l'arbre de raccordement (5) étant raccordé à la goupille de blocage (6) en transmission ;
lorsque l'ensemble d'ouverture et de fermeture de moule est dans l'état de fermeture de moule, la goupille de blocage (6) s'étend à travers la seconde plateforme convexe de raccordement (20) et dans le trou de goupille (31) pour bloquer la plaque de moule mobile (3) avec la plaque de moule fixe (2), de manière à ce que la goupille de blocage (6) soit admise à entrer dans le trou de montage de la seconde plateforme convexe de raccordement (20) et soit détachée du trou de goupille (31).

4. Système selon la revendication 1, dans lequel un rail de guidage linéaire (21) est disposé à demeure sur le bâti de machine, le bloc de coulissement (19) étant disposé coulissant sur le rail de guidage (21) le long du rail de guidage (21).

5. Système selon la revendication 1, dans lequel une saillie (180) est prévue sur l'organe d'oscillation (18), l'organe de rotation (17) a une surface de guidage (170) dessus, la saillie (180) venant en contact coulissant avec la surface de guidage (170), et la distance entre la position de contact de la saillie (180) avec la surface de guidage (170) et le second axe changeant avec la rotation de l'organe de rotation (17).

6. Système selon la revendication 1, dans lequel une encoche est ouverte sur l'organe d'oscillation (18) à distance du premier axe, et la portion de l'organe d'oscillation où l'encoche est ouverte formant une partie de fourche de transmission (181), une colonne convexe (190) étant prévue sur le bloc de coulissement (19), et la colonne convexe (190) étant prévue coulissante dans la partie de fourche de transmission (181).

7. Système selon la revendication 1, dans lequel un bras oscillant (13) est raccordé sur une extrémité inférieure de l'arbre de rotation (12), et la source de puissance entraînant la rotation de l'arbre de rotation (12) par le bras oscillant (13).

8. Système selon l'une quelconque des revendications 1 à 7, dans lequel le bâti de machine comprend un bâti de support (14), un bâti supérieur (15) situé au-dessus du bâti de support (14) et un bâti droit (16) raccordé à demeure entre le bâti de support (14) et le bâti supérieur (15), l'ensemble d'ouverture et de fermeture de moule et l'ensemble de blocage de fond de moule étant situés au-dessus du bâti de support (14).

9. Système selon la revendication 8, dans lequel une extrémité supérieure de l'arbre de rotation (12) est raccordée en rotation au bâti supérieur (15).

10. Système selon l'une quelconque des revendications 1 à 7, dans lequel un organe élastique est agencé entre l'organe d'oscillation (18) et le bâti de machine pour fournir une force de rappel à l'organe d'oscillation (18).
